# EUROPÄISCHE PATENTSCHRIFT

(11) **EP 3 112 138 B1**
(45) Veröffentlichungstag und Bekanntmachung des Hinweises auf die Patenterteilung: **05.12.2018**
(21) Anmeldenummer: 16176544.1
(22) Anmeldetag: 28.06.2016
(51) Int. Cl.: B29C 70/38, G01N 21/88, G01N 21/84

(54) **DETEKTION VON ABLEGEFEHLERN BEI DER AUTOMATISIERTEN SCHICHTWEISEN ABLAGE VON VERSTÄRKUNGSFASERBÄNDERN**
DETECTION OF DEFECTS WITHIN FIBER-REINFORCED TAPE LAYERS DURING AUTOMATED DEPOSITION
DÉTECTION DE DÉFAUTS DANS DES COUCHES EN BANDES RENFORCÉES DE FIBRES DÉPOSÉES DANS UNE MANIÈRE AUTOMATISÉE

(30) Priorität: 30.06.2015 DE 102015008313
(43) Veröffentlichungstag der Anmeldung: 04.01.2017
(73) Patentinhaber: Airbus Defence and Space GmbH, 82024 Taufkirchen (DE)
(72) Erfinder: Engel, Franz, 81539 München (DE); Orth, Tilman, 80469 München (DE); Eitzinger, Christian, 4810 Gmunden (AT); Weimer, Christian, 81539 München (DE)
(74) Vertreter: Isarpatent

(56) Entgegenhaltungen:
- EP-A1- 3 015 851
- WO-A1-2013/104600
- US-B2- 8 668 793
- E. OROMIEHIE ET AL: "In situ process monitoring for automated fibre placement using fibre Bragg grating sensors", SHM. STRUCTURAL HEALTH MONITORING, 16. August 2016 (2016-08-16), XP055313109, XX ISSN: 1475-9217, DOI: 10.1177/1475921716658616

## Beschreibung

Die Erfindung betrifft zunächst eine Vorrichtung zum automatischen Ablegen von Verstärkungsfaserbändern auf einer Unterlage mittels eines Ablegekopfes und mindestens einer diesem zugeordneten Rolle.

Darüber hinaus hat die Erfindung ein Verfahren zur Detektion von Ablegefehlern beim automatischen Ablegen von Verstärkungsfaserbändern mittels einer Vorrichtung zum Gegenstand.

Zur Herstellung leichtgewichtiger Bauteile mit einer zugleich hohen mechanischen Belastbarkeit werden heutzutage in der Regel kohlenstofffaserverstärkte Kunststoffe, wie zum Beispiel CFK verwendet. Zur rationellen Fertigung von Bauteilen aus CFK mit komplexen Geometrien kommt in diesem Zusammenhang unter anderem das s. g. AFP-Verfahren ("Automated Fibre Placement") zum Einsatz. Hierbei werden schmale Bänder aus Kohlenstofffasern mittels eines Ablegekopfes sukzessiv nebeneinander und übereinander auf einer Unterlage abgelegt und auf geeignete Weise fixiert. Zum Abschluss des im Allgemeinen vollautomatisch ablaufenden Ablegeprozesses wird der so erzeugte Verstärkungsfaseraufbau bevorzugt mit einem aushärtbaren Kunststoff infiltriert und ausgehärtet. Alternativ können auch mit einem aushärtbaren Kunststoff vorimprägnierte Bänder aus Kohlenstofffasern (s. g. "Prepregs") vollautomatisch mittels des Ablegekopfes auf einer Unterlage abgelegt werden, so dass die Lagefixierung der trockenen Kohlenstofffaserbänder und deren nachträgliche Infiltration mit dem aushärtbaren Kunststoff entfallen kann.

Zur Qualitätssicherung wird ein am Ablegekopf angeordnetes optisches Detektorsystem eingesetzt, das etwaige Ablegefehler berührungslos erfasst bzw. die Einhaltung vorgegebener Anforderungen überprüft. Typische Ablegefehler bzw. Qualitätskennwerte, die es zu identifizieren gilt, sind beispielsweise Lücken zwischen den CFK-Bändchen, Überlappungen, Verdrehungen, Abrisse, Ausfransungen, Fremdstoffe, s. g. "Fuzzballs", Spleißzonen, zu früh oder zu spät erfolgte Abschnitte oder fehlende CFK-Bändchen. Aus EP3015851 (veröffentlicht zwischen dem Prioritätsdatum und dem Tag der Anmeldung der vorliegenden Erfindung) ist ein Legekopf für eine Faserlegevorrichtung mit einem im Innenraum einer Ablegerolle angeordneten Qualitätsüberwachungssystem bekannt. Aus US8668793 sind integrierte Prozessüberwachungssysteme für Faserlegevorrichtungen bekannt.

Eine Aufgabe der Erfindung ist es daher, eine Vorrichtung zum automatischen Ablegen von Verstärkungsfaserbändern auf einer Unterlage anzugeben, bei der etwaige Ablegefehler mit hoher Genauigkeit und Zuverlässigkeit detektierbar sind. Darüber hinaus ist es eine Aufgabe der Erfindung, ein Verfahren zur verbesserten Detektion von Ablegefehlern beim AFP-Prozess anzugeben.

Diese Aufgabe wird zunächst dadurch gelöst, dass zur Erfassung von Ablegefehlern in die mindestens eine Rolle mindestens eine Strahlungsquelle und/oder mindestens ein Sensor integriert ist und diese Rolle zumindest bereichsweise für eine von der Strahlungsquelle abgegebene Strahlung durchlässig ist.

Hierdurch ist eine vollautomatische Detektion von Ablegefehlern bereits während des Ablegevorgangs möglich, so dass die ansonsten nach dem Ablegen einer Schicht von Verstärkungsfaserbändern manuell durchzuführende optische Inspektion entfallen kann. Aufgrund der direkten Integration des aus der Strahlungsquelle und dem Sensor bestehenden Messsystems in die Rolle, wird der Bewegungsraum des Ablegekopfes kaum eingeschränkt. Darüber hinaus ist aufgrund der unmittelbaren Nähe des Messsystems zum aktuellen Ablegeort eine beträchtliche Steigerung der Qualität bei der Detektion von Ablegefehlern erreichbar. Als Sensor kann beispielsweise eine für die von der Strahlungsquelle emittierte Strahlung empfindliche elektronische Kamera oder ein Sensorarray zur Anwendung kommen. Für den Fall, dass der Einbauraum innerhalb der Rolle begrenzt ist, kann der Sensor oder die Strahlungsquelle außerhalb der Rolle positioniert sein. Für den Fall, dass die Strahlungsquelle außerhalb der Rolle angeordnet ist, kann die Strahlung z. B. mittels eines Strahlungsleiters in die Rolle eingekoppelt werden. Weiterhin kann die reflektierte Strahlung auch mittels eines Strahlungsleiters aus der Rolle ausgekoppelt und einem außerhalb der Rolle angeordneten Sensor zugeführt werden. Bei den Verstärkungsfaserbändern kann es sich sowohl um trockene als auch um vorimprägnierte handeln.

Im Fall einer günstigen technischen Weiterbildung ist mittels des mindestens einen Sensors die von der mindestens einen Strahlungsquelle abgegebene und von mindestens einem abgelegten Verstärkungsfaserband als diffuse und/oder direkte Reflexionsstrahlung zurückgeworfene Strahlung zur Erfassung von Ablegefehlern erfassbar.

Infolgedessen ist eine berührungslose und zuverlässige Detektion von Ablegefehlern möglich. Zur Detektion von Ablegefehlern werden als physikalische Basisgröße die Reflexionseigenschaften des von den Verstärkungsfaserbändern reflektierten Lichts verwendet. Dabei wird die Eigenschaft genutzt, dass neben der Farbe (s.g. "Albedo") der Oberfläche auch der Neigungswinkel zur Strahlungsquelle und zum Sensor einen Einfluss auf die Helligkeit hat. Durch ein geeignetes mathematisch-geometrisches Modell kann aus der Helligkeit unter mehreren Beleuchtungsrichtungen auf die Form der Oberfläche geschlossen werden.

Bei einer weiteren vorteilhaften Ausgestaltung gibt die mindestens eine Strahlungsquelle elektromagnetische Strahlung in einem Wellenlängenbereich zwischen 200 nm bis 800 nm ab.

Hierdurch kann die Abtastung der Oberfläche der abgelegten Verstärkungsfaserbänder mit einer Strahlung erfolgen, deren Wellenlänge optimal für die Detektion von Ablegefehlern geeignet ist. Die Wellenlänge der von der Strahlungsquelle abgegebenen Strahlung liegt dabei zwischen dem fernen Infrarot und dem fernen Ultraviolett. Bevorzugt emittiert die mindestens eine Strahlungsquelle Strahlung bzw. Licht in einem für das menschliche Auge sichtbaren Wellenlängenbereich.

Nach Maßgabe einer günstigen Weiterentwicklung ist die mindestens eine Strahlungsquelle insbesondere eine Leuchtdiode, eine Laserdiode oder ein Laser.

Hierdurch steht eine Vielzahl von Beleuchtungsoptionen zur Verfügung. Die Strahlungsquelle kann die Verstärkungsfaserstränge bevorzugt kontrolliert von einer Auswerteeinheit kontinuierlich, getriggert oder mit einer bestimmten Frequenz bestrahlen bzw. beleuchten. Entsprechendes gilt für die Ansteuerung des mindestens einen Sensors.

Nach Maßgabe einer weiteren günstigen Ausgestaltung ist die Rolle mit integrierter Strahlungsquelle und/oder mit integriertem Sensor zumindest bereichsweise flexibel ausgebildet.

Hierdurch kann die Rolle auf gekrümmten Unterlagen eingesetzt werden, wobei die geänderten Brechungsverhältnisse zu berücksichtigen sind.

Bei einer weiteren günstigen Fortbildung ist vorgesehen, dass die Rolle mit integrierter Strahlungsquelle und/oder mit integriertem Sensor zumindest bereichsweise mit einem für die Strahlung im Wesentlichen durchlässigen Material, insbesondere mit einem Glas oder mit einem Kunststoff, gebildet ist.

Infolgedessen ist ein weitestgehend verlustfreier Durchtritt der von der Strahlungsquelle abgegebenen Strahlung gegeben. Das strahlungsdurchlässige Glas bzw. der Kunststoff kann vollkommen transparent, milchig und/oder entspiegelt sein.

Im Fall einer Ausgestaltung sind mittels der Rolle mit integrierter Strahlungsquelle und/oder mit integriertem Sensor die abgelegten Verstärkungsfaserbänder kompaktierbar und/oder drapierbar.

Hierdurch kann die z. B. mit der Strahlungsquelle und dem Sensor ausgerüstete Rolle weitere Aufgaben erfüllen, woraus ein kostengünstiger Aufbau der Vorrichtung resultiert. Weiterhin sind neben der einen, mit der Strahlungsquelle und dem Sensor ausgerüsteten Rolle, weitere Rollen für die Kompaktierungsfunktion und/oder die Drapierfunktion vorgesehen. Durch einen Arbeitsabstand, der einen ausreichend großen Bereich abdeckt, kann die Rolle bei gleichzeitiger Übernahme der Kompaktierungsfunktion auch segmentiert ausgebildet sein.

Erfindungsgemäß ist die Rolle mit integrierter Strahlungsquelle und/oder mit integriertem Sensor vor oder hinter mindestens einer weiteren Rolle, insbesondere einer Kompaktierrolle oder einer Drapierrolle, positioniert.
Hierdurch ist eine größere konstruktive Freiheit hinsichtlich der Auslegung der mit der Strahlungsquelle und dem Sensor bestückten Rolle gegeben. Zugleich kann gegebenenfalls voreilend oder nachlaufend eine Erwärmung der Verstärkungsfaserbänder mittels der mindestens einen Strahlungsquelle und/oder eine zusätzliche Kompaktierung erfolgen.

Gemäß einer Weiterbildung sind die abgelegten Verstärkungsfaserbänder mittels der mindestens einen Strahlungsquelle erwärmbar.

Hierdurch können z. B. geeignet vorimprägnierte Verstärkungsfaserbänder klebrig gemacht und/oder ausgehärtet werden. Zum Erwärmen der Verstärkungsfaserbänder und zum Detektieren von Ablegefehlern können zwei unterschiedliche Strahlungsquellen zum Einsatz kommen, um eine wechselseitige Beeinflussung zu vermeiden.

Bei einer vorteilhaften Weiterbildung sind von dem mindestens einen Sensor erzeugte Messdaten mittels einer elektronischen Auswerteeinheit zur Erkennung von Ablegefehlern auswertbar.

Infolgedessen ist eine weitgehend selbsttätige Auswertung und Erkennung von Ablegefehlern möglich. Die Auswerteeinheit kann z. B. mit einem Digitalrechner, einem PC, einem FPGA, einem Mikrocontroller, einem mittels eines Software-Algorithmus auf einer geeigneten Hardwareplattform realisierten Neuronalen-Netzwerk oder dergleichen realisiert sein. Die Auswerteeinheit detektiert auf der Basis der von dem mindestens einen Sensor erzeugten Messdaten mittels geeigneter Algorithmen etwaige Ablegefehler und stellt diese online oder offline in einer für einen Anwender geeigneten Weise dar.

Bevorzugt ist der mindestens eine Sensor eine Kamera zur Erzeugung von Bilddaten. Hierdurch ist eine besonders detaillierte und flächige Erfassung der von der Oberfläche der Verstärkungsfaserbänder diffus und/oder direkt zurückgeworfenen Reflexionsstrahlung möglich.

Darüber hinaus wird die eingangs genannte Aufgabe durch ein Verfahren nach Maßgabe des Oberbegriffs des Patentanspruchs 13 gelöst, das durch die folgenden Schritte gekennzeichnet ist:
a) Ablegen von Verstärkungsfaserbändern mittels der Vorrichtung,
b) bereichsweises Bestrahlen mindestens eines abgelegten Verstärkungsfaserbandes mittels mindestens einer Strahlungsquelle,
c) Erfassen der von dem mindestens einen abgelegten Verstärkungsfaserband diffus und/oder direkt zurückgeworfenen Reflexionsstrahlung mittels mindestens eines Sensors, und
d) Auswerten der von dem mindestens einen Sensor gelieferten Messdaten mittels einer Auswerteeinheit zur Detektion von Ablegefehlern.

Hierdurch lassen sich etwaige Ablegefehler beim Ablegeprozess von Verstärkungsbändern auf einfache Art und Weise, mit hoher Zuverlässigkeit und bereits unmittelbar beim Ablegen eines Abschnitts eines Verstärkungsfaserbandes automatisch ermitteln.

Im Fall einer vorteilhafte Weiterbildung des Verfahrens erfolgt beim Auftreten eines Ablegefehlers eine Signalisierung mittels der Auswerteeinheit und/oder das Ablegen von Verstär-kungsfaserbändern wird unterbrochen.

Hierdurch lassen sich Ablegefehler frühzeitig erkennen und schwer oder gar nicht mehr mit vertretbarem Aufwand zu korrigierende Folgefehler, d. h. das Ablegen von Verstärkungs¬faserbändern auf einen bereits vorhandenen Ablegefehler, vermeiden.

In der Zeichnung zeigt:
Fig. 1 eine perspektivische Prinzipdarstellung einer Vorrichtung zum automatischen Ablegen von Verstärkungsfaserbändern auf einer Unterlage, und
Fig. 2 eine vergrößerte Darstellung des Ausschnitts II von Fig. 1.

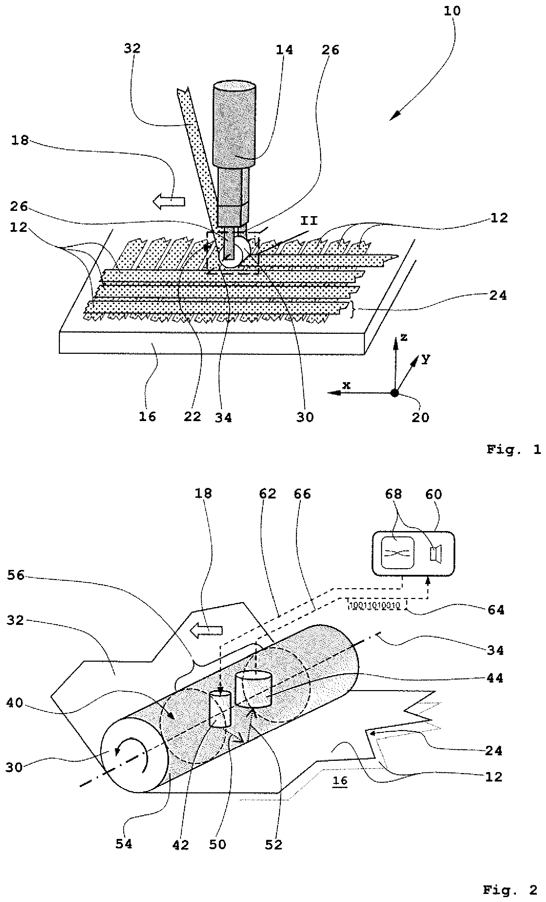

Fig. 1 zeigt eine perspektivische Prinzipdarstellung einer Vorrichtung zum automatischen Ablegen von Verstärkungsfaserbändern auf einer Unterlage.

Eine Vorrichtung 10 weist zum automatischen Ablegen von Verstärkungsfaserbändern 12 im AFP-Prozess unter anderem einen Ablegekopf 14 auf. Zum schichtweisen, sukzessiven Ablegen der Verstärkungsfaserbänder 12 auf einer Unterlage 16 ist der Ablegekopf 14 z. B. mittels eines nicht dargestellten Handhabungsgeräts, insbesondere eines Standard-Industrieroboters mit einer Vielzahl von Freiheitsgraden, in Relation zu der Unterlage 16 frei positionierbar. Als Verstärkungsfaserbänder 12 kommen bevorzugt schmale Kohlenstofffaserbänder bzw. CFK-Bändchen zum Einsatz. Die Verstärkungsfaserbänder 12 können trocken oder zumindest abschnittsweise mit einem geeigneten Kunststoff vorimprägniert sein. Die Unterlage 16 kann eine von der hier lediglich exemplarisch gezeigten ebenen Form abweichende, beispielsweise eine beliebig zweidimensional gekrümmte bzw. eine zumindest bereichsweise konvex oder konkav gekrümmte Oberflächengeometrie aufweisen. Der Ablegekopf 14 bewegt sich hier lediglich beispielhaft in einer Ablegerichtung 18 parallel zu einer x-Achse eines Koordinatensystems 20 vertikal beabstandet zur Unterlage 16 bzw. zu den darauf bereits abgelegten Verstärkungsfaserbändern 12. Grundsätzlich ist der Ablegekopf 14 automatisiert auf beliebigen geraden oder gekrümmten Bahnen frei im Raum in Relation zu der Unterlage 16 bewegbar.

An einem freien Ende 22 des Ablegekopfes 14, der einer obersten Schicht 24 von bereits abgelegten Verstärkungsfaserbändern 12 bzw. der Unterlage 16 zugewandt ist, befindet sich eine in einer gabelförmigen Halterung 26 drehbar gelagerte zylindrische Rolle 30 zum Führen bzw. Umlenken eines aktuell abzulegenden Verstärkungsfaserbandes 32. Gegebenenfalls kann mittels dieser Rolle 30 zugleich das Kompaktieren bzw. das Andrücken und/oder das Drapieren der bereits auf der Unterlage 16 platzierten Verstärkungsfaserbänder 12 erfolgen. Erfindungsgemäß ist direkt in diese Rolle 30 ein hier nicht dargestellter Sensor und/oder eine Strahlungsquelle zum Detektieren von etwaigen Ablegefehlern integriert. Eine Drehachse 34 der Rolle 30 verläuft hier beispielhaft quer bzw. rechtwinklig zu der Ablagerichtung 18 bzw. der x-Achse des Koordinatensystems 20.

Die Fig. 2 illustriert eine vergrößerte Darstellung des Ausschnitts II von Fig. 1.

Durch die - wie mit dem schwarzen Drehpfeil angedeutet - um die Drehachse 34 drehbar gelagerte Rolle 30 wird das aktuell von einer nicht dargestellten Vorratsspule abgezogene und abzulegende Verstärkungsfaserband 32 zumindest geführt bzw. umgelenkt und auf der Unterlage 16 abgelegt und bildet dort das Verstärkungsfaserband 12. Mittels der Rolle 30 und mit weiteren, nicht dargestellten Rollen, kann das Verstärkungsfaserband 12 gegebenenfalls kompaktiert und/oder drapiert werden. Bei diesen in den Zeichnungen nicht dargestellten Rollen kann es sich beispielsweise um sogenannte Kompaktier- bzw. Andruckrollen oder Drapierrollen handeln, die in Bezug zu der Ablegerichtung 18 bzw. zur Bewegungsrichtung der Rolle 30 in Relation zu der Unterlage 16 -jeweils in Abhängigkeit von der zu übernehmenden Funktion als Drapier- oder Kompaktierrolle - vor oder nach der Rolle 30 angeordnet sind.

In einem hier lediglich beispielhaft hohlzylindrisch angedeuteten Innenraum 40 der Rolle 30 sind bevorzugt eine Strahlungsquelle 42 und ein Sensor 44 integriert. Mittels der Strahlungsquelle 42 wird elektromagnetische Strahlung 50 in einem Wellenlängenbereich von 1 mm (fernes Infrarot) bis zu 200 nm (fernes Ultraviolett) erzeugt und auf das mindestens eine Verstärkungsfaserband 32 bzw. bereichsweise auf die oberste Schicht 24 von abgelegten Verstärkungsfaserbändern 12 abgestrahlt.

Die von der Strahlungsquelle 42 emittierte Strahlung 50 wird von dem mindestens einen Verstärkungsfaserband 12 der obersten Schicht 24 als diffuse und/oder direkte Reflexionsstrahlung 52 zurückgeworfen und trifft auf den Sensor 44 auf, der für eben diesen Wellenlängenbereich sensitiv ausgebildet ist.

Um einen möglichst ungehinderten Durchgang der Strahlung 50 bzw. der Reflexionsstrahlung 52 zu erreichen, ist die Rolle 30 zumindest bereichsweise transparent, d.h. durchlässig für die Strahlung 50 und die Reflexionsstrahlung 52 ausgebildet. Zu diesem Zweck weist eine zylindrische Außenmantelfläche 54 der Rolle 30 hier einen umlaufenden, transparenten Bereich 56 auf, der für die Strahlung 50 bzw. die Reflexionsstrahlung 52 weitestgehend durchlässig ist. Dieser zylindrische Bereich 56 kann beispielsweise mit einem Glas oder mit einem strahlungsdurchlässigen Kunststoff gebildet sein. Alternativ kann auch die gesamte Rolle 30 transparent ausgestaltet sein. Weiterhin ist es denkbar, die Rolle 30 zumindest abschnittsweise flexibel zu gestalten, um ein Abrollen derselben auf einem gekrümmten Untergrund bei größeren Rollenabmessungen zu erlauben.

Die Strahlungsquelle 42 sowie der Sensor 44 sind hier beispielsweise drehfest in Relation zur Drehachse 34 angeordnet, wobei durch den sich über den gesamten Umfang erstreckenden, die Funktion eines durchgehenden "Fensters" innehabenden Bereich 56 unabhängig von der jeweiligen Drehposition der Rolle 30 stets ein ungehinderter Durchtritt der Strahlung 50 bzw. der Reflexionsstrahlung 52 gegeben ist, so dass eine kontinuierliche Detektion von Ablagefehlern möglich ist.

Weiterhin kann in die Außenmantelfläche 54 der Rolle 30 eine Vielzahl von umfangsseitig bevorzugt gleichmäßig zueinander beanstandeten, fensterartigen Aussparungen für den Durchtritt der Strahlung 50 bzw. der Reflexionsstrahlung 52 eingebracht sein. In einer solchen Konstellation kommt es infolge der sich ständig drehenden Rolle 30 und dem zwischen jeweils zwei benachbarten fensterartigen Aussparungen verbleibenden Materialstegen bei drehfest angeordneter Strahlungsquelle 42 und drehfest positioniertem Sensor 44 jedoch zu kurzzeitigen periodischen Unterbrechungen der Strahlung 50 bzw. der Reflexionsstrahlung 52, so dass eine kontinuierliche Detektion von Ablagefehlern nicht gewährleistet ist.

Die Strahlungsquelle 42 wird bevorzugt von einer Auswerteeinheit 60, wie mit einer Leitung 62 angedeutet, angesteuert, während die von dem Sensor 44 erzeugten Messdaten 64 über eine weitere Leitung 66 der Auswerteeinheit 60 zur detaillierten Auswertung und Analyse zugeführt werden. Die von dem mindestens einen Verstärkungsfaserband 12 zurückgeworfene Reflexionsstrahlung 52 erlaubt in Verbindung mit der Auswerteeinheit 60 eine sehr zuverlässige und detailgenaue Detektion sowie eine Typunterscheidung von etwaig auftretenden Ablegefehlern der eingangs beschriebenen Art. Zu diesem Zweck ist in der Auswerteeinheit 60 eine Vielzahl von geeigneten mathematischen Algorithmen hinterlegt.

Die mindestens eine Strahlungsquelle 42 ist bevorzugt mit einer Leuchtdiode, einer Laserdiode, mit einem Laser oder einem anderen kompakten Leuchtmittel aufgebaut. Der mindestens eine Sensor 44 kann beispielsweise mit einer elektronischen Kamera (CCD-Kamera) oder mit einem zweidimensionalen Sensorarray realisiert sein. Für den Fall, dass der Sensor 44 mit einer Kamera gebildet ist, handelt es sich bei den Messdaten 64 bevorzugt um digitale Bilddaten. Die Auswerteeinheit 60 ist bevorzugt mit einer universellen, digitalen Recheneinheit, insbesondere mit einem PC, einem vorprogrammierten FPGA, einem Mikrocontroller, einem digital simulierten neuronalen Netzwerk oder dergleichen umgesetzt.

Erforderlichenfalls kann die Strahlungsquelle 42 oder der Sensor 44 auch außerhalb der Rolle 30 angeordnet werden, was insbesondere bei zu geringen Abmessungen des Innenraums der Rolle 30 von Vorteil sein kann. In einer solchen Konstellation kann die Strahlung 50 bzw. die Reflexionsstrahlung 52 mittels geeigneter Strahlungsleiter bzw. Lichtleiter aus oder in die Rolle 30 eingekoppelt werden.

Da die Ansteuerung der Strahlungsquelle 42 vorzugsweise ebenfalls mittels der Auswerteeinheit 60 erfolgt, ergibt sich eine Vielzahl von zeichnerisch nicht dargestellten Optionen, das mindestens eine abgelegte Verstärkungsfaserband 12 bzw. die oberste Schicht 24 der abgelegten Verstärkungsfaserbänder 12 mittels der Rolle 30 zumindest bereichsweise zu bestrahlen bzw. zu beleuchten und die Reflexionsstrahlung 52 dem Sensor 44 in geeigneter Weise zuzuleiten.

So können zwei oder mehr Strahlungsquellen mittels der Auswerteeinheit 60 alternierend geschaltet werden, wobei die mit den unterschiedlichen Strahlungsquellen vom Sensor 44 aufgenommenen digitalen Messdaten 64 bzw. die Bilddaten gemeinsam analysiert werden und die unterschiedlichen Bestrahlungsrichtungen durch die geeignete geometrische Anordnung der Strahlungsquellen erzeugt werden. Alternativ können die unterschiedlichen Strahlungsquellen durch Beugung bzw. Diffraktion oder Interferenz erzeugt werden. Durch die mindestens eine Strahlungsquelle 42 kann weiterhin ein lokaler Hell-/Dunkelübergang erzeugt werden und der Sensor 44 nimmt diese Messdaten 64 bzw. diese Bilddaten spezifisch im Bereich dieses Übergangs auf. Weiterhin kann mittels der Strahlungsquelle 42 eine nicht dargestellte schmale Linie auf das abgelegte Verstärkungsfaserband 12 projiziert werden, deren Verlauf mit Hilfe des Sensors 44 erfasst und mittels der Auswerteeinheit 60 einer eingehenden Analyse unterzogen wird. Darüber hinaus können zwei oder mehr Strahlungsquellen zum Einsatz kommen, deren Strahlung eine unterschiedliche Frequenz bzw. Wellenlänge aufweist, wobei die Auswertung durch die Extraktion und Analyse der von dem mindestens einen Sensor erfassten, einzelnen Farbkanäle mittels der Auswerteeinheit 60 erfolgt.

Die zur Detektion von Ablegefehlern auf der Basis der vom berührungslosen optischen Sensor 44 bereitgestellten Messdaten 64 erforderlichen mathematischen Algorithmen (digitale Bildanalyse) sind dem Fachmann aus dem Stand der Technik hinreichend geläufig.

Ferner können die Verstärkungsfaserbänder 12 mittels der Strahlungsquelle 42 oder einer weiteren nicht dargestellten Strahlungsquelle erwärmt und hierdurch adhäsiv und/oder im Fall von geeignet mit Kunststoff vorimprägnierten Verstärkungsfaserbändern 12 auch ausgehärtet werden, wodurch sich signifikante Rationalisierungspotenziale bei der Herstellung von CFK-Formteilen im AFP-Prozess ergeben.

Im Zuge des erfindungsgemäßen Verfahrens werden die Verstärkungsfaserbänder 12 mittels der Vorrichtung 10 auf der Unterlage 16 automatisiert abgelegt. Zugleich wird das mindestens eine Verstärkungsfaserband 12 zumindest bereichsweise mittels der mindestens einen, bevorzugt in die Rolle 30 direkt integrierten Strahlungsquelle 42 bestrahlt. Parallel hierzu erfolgt das Erfassen der von dem mindestens einen abgelegten Verstärkungsfaserband 12 diffus und/oder direkt zurückgeworfenen Reflexionsstrahlung 52 mittels des vorzugsweise gleichfalls in die Rolle 30 integrierten Sensors 44 sowie die numerische Auswertung der von diesem gelieferten Messdaten 64 mittels der elektronischen Auswerteeinheit 60 zur Detektion von etwaigen Ablegefehlern. Darüber hinaus lässt sich mittels der Auswerteeinheit 60 neben dem Vorhandensein eines Ablegefehlers auch dessen Art bzw. Typ bestimmen.

Für den Fall, dass ein Ablegefehler detektiert wird, kann z. B. durch eine der Auswerteeinheit 60 zugeordnete optische und/oder akustische Signaleinrichtung 68 ein entsprechender Hinweis an einen Anwender erfolgen und/oder der gesamte Ablegeprozess kann ohne das Erfordernis eines weiteren äußeren Eingriffs selbsttätig unterbrochen oder gänzlich beendet werden.

### Bezugszeichenliste

- 10.: Vorrichtung
- 12.: Verstärkungsfaserband (abgelegt)
- 14.: Ablegekopf
- 16.: Unterlage
- 18.: Ablegerichtung
- 20.: Koordinatensystem
- 22.: freies Ende (Ablegekopf)
- 24.: oberste Schicht
- 26.: Halterung (gabelförmig)

- 30.: Rolle
- 32.: Verstärkungsfaserband
- 34.: Drehachse (Rolle)

- 40.: Innenraum (Rolle)
- 42.: Strahlungsquelle
- 44.: Sensor

- 50.: Strahlung
- 52.: Reflexionsstrahlung
- 54.: Außenmantelfläche
- 56.: Bereich (strahlungsdurchlässig)

- 60.: Auswerteeinheit
- 62.: Leitung
- 64.: Messdaten
- 66.: Leitung
- 68.: Signaleinrichtung

## Patentansprüche

1. Vorrichtung (10) zum automatischen Ablegen von Verstärkungsfaserbändern (12, 32) auf einer Unterlage (16) mittels eines Ablegekopfes (14), aufweisend:
mindestens eine dem Ablegekopf (14) zugeordnete Rolle (30), in welche zur Erfassung von Ablegefehlern mindestens eine Strahlungsquelle (42) und/oder mindestens ein Sensor (44) integriert ist und welche zumindest bereichsweise für eine von der Strahlungsquelle (42) abgegebene Strahlung (50) durchlässig ist; und
mindestens eine weitere Rolle, welche hinter oder vor der Rolle (30) mit integrierter Strahlungsquelle (42) und/oder mit integriertem Sensor (44) positioniert ist.

2. Vorrichtung (10) nach Anspruch 1, **dadurch gekennzeichnet, dass** mittels des mindestens einen Sensors (44) die von der mindestens einen Strahlungsquelle (42) abgegebene und von mindestens einem abgelegten Verstärkungsfaserband (12) als diffuse und/oder direkte Reflexionsstrahlung (52) zurückgeworfene Strahlung (50) zur Erfassung von Ablegefehlern erfassbar ist.

3. Vorrichtung (10) nach Anspruch 1 oder 2, **dadurch gekennzeichnet, dass** die mindestens eine Strahlungsquelle (42) elektromagnetische Strahlung (50) in einem Wellenlängenbereich zwischen 1 mm und 200 nm abgibt.

4. Vorrichtung (10) nach einem der voranstehenden Ansprüche, **dadurch gekennzeichnet, dass** die mindestens eine Strahlungsquelle (42) insbesondere eine Leuchtdiode, eine Laserdiode oder ein Laser ist.

5. Vorrichtung (10) nach einem der voranstehenden Ansprüche, **dadurch gekennzeichnet, dass** die Rolle (30) mit integrierter Strahlungsquelle (42) und/oder mit integriertem Sensor (44) zumindest bereichsweise flexibel ausgebildet ist.

6. Vorrichtung (10) nach Anspruch 5, **dadurch gekennzeichnet, dass** die Rolle (30) mit integrierter Strahlungsquelle (42) und/oder mit integriertem Sensor (44) zumindest bereichsweise mit einem für die Strahlung (50) im Wesentlichen durchlässigen Material, insbesondere mit einem Glas oder mit einem Kunststoff, gebildet ist.

7. Vorrichtung (10) nach einem der voranstehenden Ansprüche, **dadurch gekennzeichnet, dass** mittels der Rolle (30) mit integrierter Strahlungsquelle (42) und/oder mit integriertem Sensor (44) die abgelegten Verstärkungsfaserbänder (12) kompaktierbar und/oder drapierbar sind.

8. Vorrichtung (10) nach einem der voranstehenden Ansprüche, **dadurch gekennzeichnet, dass** die Rolle (30) mit integrierter Strahlungsquelle (42) und/oder mit integriertem Sensor (44) segmentiert ausgebildet ist.

9. Vorrichtung (10) nach einem der voranstehenden Ansprüche, **dadurch gekennzeichnet, dass** die Rolle (30) mit integrierter Strahlungsquelle (42) und/oder mit integriertem Sensor (44) eine zylindrische Außenmantelfläche (54) mit einem umlaufenden, transparenten Bereich (56) aufweist, der für Strahlung weitestgehend durchlässig ist.

10. Vorrichtung (10) nach einem der voranstehenden Ansprüche, **dadurch gekennzeichnet, dass** die abgelegten Verstärkungsfaserbänder (12) mittels der mindestens einen Strahlungsquelle (42) erwärmbar sind.

11. Vorrichtung (10) nach einem der voranstehenden Ansprüche, **dadurch gekennzeichnet, dass** von dem mindestens einen Sensor (42) erzeugte Messdaten (64) mittels einer elektronischen Auswerteeinheit (60) zur Erkennung von Ablegefehlern auswertbar sind.

12. Vorrichtung (10) nach Anspruch 11, **dadurch gekennzeichnet, dass** der mindestens eine Sensor (44) eine Kamera zur Erzeugung von Bilddaten ist.

13. Verfahren zur Detektion von Ablegefehlern beim automatischen Ablegen von Verstärkungsfaserbändern (12) mittels einer Vorrichtung (10) nach einem der voranstehenden Ansprüche, mit folgenden Schritten:
a) Ablegen von Verstärkungsfaserbändern (12) mittels der Vorrichtung (10),
b) bereichsweises Bestrahlen mindestens eines abgelegten Verstärkungsfaserbandes (12) mittels mindestens einer Strahlungsquelle (42),
c) Erfassen der von dem mindestens einen abgelegten Verstärkungsfaserband (12) diffus und/oder direkt zurückgeworfenen Reflexionsstrahlung (52) mittels mindestens eines Sensors (44), und
d) Auswerten der von dem mindestens einen Sensor (44) gelieferten Messdaten (64) mittels einer Auswerteeinheit (60) zur Detektion von Ablegefehlern.

14. Verfahren nach Anspruch 13, **dadurch gekennzeichnet, dass** beim Auftreten eines Ablegefehlers eine Signalisierung mittels der Auswerteeinheit (60) erfolgt und/oder das Ablegen von Verstärkungsfaserbändern (12) unterbrochen wird.

15. Verfahren nach Anspruch 13 oder 14, **dadurch gekennzeichnet, dass** der Schritt des bereichsweisen Bestrahlens des mindestens einen abgelegten Verstärkungsfaserbandes (12) eine oder mehrere der folgenden Alternativen umfasst:
- Projizieren einer schmalen Linie auf das abgelegte Verstärkungsband (12);
- eine alternierende Bestrahlung mittels zwei oder mehr Strahlungsquellen;
- eine Bestrahlung mittels zwei oder mehr Strahlungsquellen, deren Strahlung unterschiedliche Wellenlänge aufweist.

## Claims

1. Device (10) for automatically placing reinforcing fibre tapes (12, 32) on an underlying surface (16) by means of a placement head (14), comprising:
at least one roller (30), which is assigned to the placement head (14) and in which at least one radiation source (42) and/or at least one sensor (44) is integrated for detecting placement errors and which is transmissive at least in some regions to a radiation (50) emitted by the radiation source (42);
at least one further roller, which is positioned downstream or upstream of the roller (30) with the integrated radiation source (42) and/or with the integrated sensor (44).

2. Device (10) according to Claim 1, **characterized in that** the radiation (50) emitted by the at least one radiation source (42) and returned as diffuse and/or direct reflected radiation (52) by at least one placed reinforcing fibre tape (12) can be detected by means of the at least one sensor (44) for detecting placement errors.

3. Device (10) according to Claim 1 or 2, **characterized in that** the at least one radiation source (42) emits electromagnetic radiation (50) in a wavelength range of between 1 mm and 200 nm.

4. Device (10) according to one of the preceding claims, **characterized in that** the at least one radiation source (42) is in particular a light-emitting diode, a laser diode or a laser.

5. Device (10) according to one of the preceding claims, **characterized in that** the roller (30) with the integrated radiation source (42) and/or with the integrated sensor (44) is formed flexibly, at least in certain regions.

6. Device (10) according to Claim 5, **characterized in that** the roller (30) with the integrated radiation source (42) and/or with the integrated sensor (44) is formed at least in certain regions with a material that is substantially transmissive to the radiation (50), in particular with a glass or with a plastic.

7. Device (10) according to one of the preceding claims, **characterized in that** the placed reinforcing fibre tapes (12) can be compacted and/or can be draped by means of the roller (30) with the integrated radiation source (42) and/or with the integrated sensor (44) .

8. Device (10) according to one of the preceding claims, **characterized in that** the roller (30) with the integrated radiation source (42) and/or with the integrated sensor (44) is formed in a segmented manner.

9. Device (10) according to one of the preceding claims, **characterized in that** the roller (30) with the integrated radiation source (42) and/or with the integrated sensor (44) has a cylindrical outer lateral surface (54) with a peripheral transparent region (56), which is to the greatest extent transmissive to radiation.

10. Device (10) according to one of the preceding claims, **characterized in that** the placed reinforcing fibre tapes (12) can be heated by means of the at least one radiation source (42).

11. Device (10) according to one of the preceding claims, **characterized in that** measurement data (64) generated by the at least one sensor (42) can be evaluated by means of an electronic evaluation unit (60) for the recognition of placement errors.

12. Device (10) according to Claim 11, **characterized in that** the at least one sensor (44) is a camera for generating image data.

13. Method for the detection of placement errors during the automatic placement of reinforcing fibre tapes (12) by means of a device (10) according to one of the preceding claims, with the following steps:
a) placing reinforcing fibre tapes (12) by means of the device (10),
b) irradiating certain regions of at least one placed reinforcing fibre tape (12) by means of at least one radiation source (42),
c) detecting the reflected radiation (52) diffusely and/or directly returned by the at least one placed reinforcing fibre tape (12) by means of at least one sensor (44), and
d) evaluating the measurement data (64) supplied by the at least one sensor (44) by means of an evaluation unit (60) for the detection of placement errors.

14. Method according to Claim 13, **characterized in that**, when a placement error occurs, signalling takes place by means of the evaluation unit (60) and/or the placement of reinforcing fibre tapes (12) is interrupted.

15. Method according to Claim 13 or 14, **characterized in that** the step of irradiating certain regions of the at least one placed reinforcing fibre tape (12) comprises one or more of the following alternatives:
- projecting a narrow line onto the placed reinforcing tape (12);
- alternating irradiation by means of two or more radiation sources;
- irradiation by means of two or more radiation sources, the radiation of which has different wavelengths.

## Revendications

1. Dispositif (10) de dépose automatique de bandes de fibres de renforcement (12, 32) sur un support (16) au moyen d'une tête de dépose (14), comprenant :
au moins un rouleau (30) associé à la tête de dépose (14), dans lequel sont intégrés au moins une source de rayonnement (42) et/ou au moins un capteur (44) pour la détection de défauts de dépose et qui est transparent, au moins dans certaines zones, à un rayonnement (50) délivré par la source de rayonnement (42) ; et
au moins un rouleau supplémentaire qui est positionné derrière ou devant le rouleau (30) avec source de rayonnement (42) intégrée et/ou avec capteur (44) intégré.

2. Dispositif (10) selon la revendication 1, **caractérisé en ce que** le rayonnement (50) délivré par l'au moins une source de rayonnement (42) et renvoyé sous la forme d'un rayonnement de réflexion (52) diffus et/ou direct par au moins une bande de fibres de renforcement (12) déposée peut être détecté au moyen de l'au moins un capteur (44) en vue de détecter des défauts de dépose.

3. Dispositif (10) selon la revendication 1 ou 2, **caractérisé en ce que** l'au moins une source de rayonnement (42) délivre un rayonnement (50) électromagnétique dans une plage de longueurs d'onde entre 1 mm et 200 nm.

4. Dispositif (10) selon l'une des revendications précédentes, **caractérisé en ce que** l'au moins une source de rayonnement (42) est notamment une diode électroluminescente, une diode laser ou un laser.

5. Dispositif (10) selon l'une des revendications précédentes, **caractérisé en ce que** le rouleau (30) avec source de rayonnement (42) intégrée et/ou avec capteur (44) intégré est de configuration flexible au moins dans certaines zones.

6. Dispositif (10) selon la revendication 5, **caractérisé en ce que** le rouleau (30) avec source de rayonnement (42) intégrée et/ou avec capteur (44) intégré est formé, au moins dans certaines zones, d'un matériau sensiblement transparent au rayonnement (50), notamment d'un verre ou d'une matière plastique.

7. Dispositif (10) selon l'une des revendications précédentes, **caractérisé en ce que** les bandes de fibres de renforcement (12) déposée peuvent être compactées et/ou être drapées au moyen du rouleau (30) avec source de rayonnement (42) intégrée et/ou avec capteur (44) intégré.

8. Dispositif (10) selon l'une des revendications précédentes, **caractérisé en ce que** le rouleau (30) avec source de rayonnement (42) intégrée et/ou avec capteur (44) intégré est de configuration segmentée.

9. Dispositif (10) selon l'une des revendications précédentes, **caractérisé en ce que** le rouleau (30) avec source de rayonnement (42) intégrée et/ou avec capteur (44) intégré possède une enveloppe externe (54) cylindrique pourvue d'une zone circonférentielle transparente (56) qui est en grande partie transparente pour le rayonnement.

10. Dispositif (10) selon l'une des revendications précédentes, **caractérisé en ce que** les bandes de fibres de renforcement (12) déposée peuvent être chauffées au moyen de l'au moins une source de rayonnement (42).

11. Dispositif (10) selon l'une des revendications précédentes, **caractérisé en ce que** les données de mesure (64) générées par l'au moins un capteur (42) peuvent être interprétées au moyen d'une unité d'interprétation (60) électronique en vue de reconnaître les défauts de dépose.

12. Dispositif (10) selon la revendication 11, **caractérisé en ce que** l'au moins un capteur (44) est une caméra destinée à générer des données d'image.

13. Procédé de détection de défauts de dépose lors de la dépose automatique de bandes de fibres de renforcement (12) au moyen d'un dispositif (10) selon l'une des revendications précédentes, comprenant les étapes suivantes :
a) dépose de bandes de fibres de renforcement (12) au moyen du dispositif (10),
b) irradiation dans certaines zones d'au moins une bande de fibres de renforcement (12) déposée au moyen d'au moins une source de rayonnement (42),
c) détection, au moyen d'au moins un capteur (44), du rayonnement de réflexion (52) renvoyé diffus et/ou direct par l'au moins une bande de fibres de renforcement (12) déposée, et
d) interprétation des données de mesure (64) délivrées par l'au moins un capteur (44) au moyen d'une unité d'interprétation (60) en vue de détecter les défauts de dépose.

14. Procédé selon la revendication 13, **caractérisé en ce que** lorsqu'il se produit un défaut de dépose, une signalisation est effectuée au moyen de l'unité d'interprétation (60) et/ou la dépose bandes de fibres de renforcement (12) est interrompue.

15. Procédé selon la revendication 13 ou 14, **caractérisé en ce que** l'étape de l'irradiation dans certaines zones de l'au moins une bande de fibres de renforcement (12) déposée comprend une ou plusieurs des variantes suivantes :
- projection d'une ligne étroite sur la bande de renforcement (12) déposée ;
- une irradiation alternée au moyen d'au moins deux sources de rayonnement ;
- une irradiation au moyen d'au moins deux sources de rayonnement dont les rayonnements possèdent des longueurs d'onde différentes.
